# EUROPEAN PATENT APPLICATION

(11) **EP 4 413 847 A1**
(43) Date of publication of application: **14.08.2024**
(21) Application number: 24154942.7
(22) Date of filing: 31.01.2024
(51) Int. Cl.: A01D 41/127, G01N 33/00, G06V 20/10

(54) **SYSTEM FOR TRACKING CROP VARIETY IN A CROP FIELD**

(30) Priority: 07.02.2023 US 202363483675 P
(71) Applicant: AGCO Corporation, Duluth, GA 30096 (US)
(72) Inventor: KOCH, Jared J., Hesston, 67062 (US); EKHOLM, Joshua, Hesston, 67062 (US)
(74) Representative: AGCO Intellectual Property Department

(57) **Abstract**

Described herein are technologies for tracking crop variety in a field while harvesting a crop. In an embodiment, a camera (302 or 304) mounted to a harvester (300) captures images of a crop (600, 700, 800) and a computing system (200) determines characteristics of the crop (702, 704, 706, 708A, 804, 806, 808A) in the images (600, 700, 800) (such as its height, color, and density) (instructions 222). The aforesaid two steps occur continuously as the harvester (300) moves through a field. Also, while the harvester (300) moves through the field, the computing system (200) determines whether the determined characteristics deviate from known characteristics of a first variety of the crop (instructions 222). When the determined characteristics deviate from the know characteristics beyond a threshold, the portion of the images (600, 700, 800) containing the deviating characteristics is labeled as including a second variety of the crop (710) (instructions 222). Also, the images (600, 700, 800) are geotagged (712, 700, 800) and the computing system (200) generates a map (904) of the varieties of the crop based on the labeled and geotagged images (instructions 228).

## Description

### TECHNICAL FIELD

The present disclosure relates to a system for tracking crop variety in a crop field.

### BACKGROUND

Variety tracking traditionally begins with the planting operation. A farmer will record where seeds are placed by a planter along with linking a field to seed varieties planted. This requires an advanced terminal for the recording and documentation of the planting process. When harvest begins, the farmer needs to pull the crop variety information into their harvest terminal if they want to complete the link of planting to harvesting. This link works under the assumption that the farmer is using recent and new technology that allows this transfer of data effectively. If a farmer is not equipped with such technology, then the farmer has to manually track varieties throughout the harvest. Such tasks are even further complicated with modern precision agriculture.

Precision agriculture or precision farming is a farming management model based on measuring and responding to inter and intra-field variability in crops and farming conditions. The goal of precision agriculture research is to define a decision support system (DSS) for farming management to enhance returns and increase preservation of resources. Specifically, the precision in responses to variability in farming can be improved when known and predetermined farming information is processed and organized to enhance the information and then used to assist in the control and management of farming. Although precision farming can enhance returns and increase preservation of resources, it can complicate farming information systems especially systems tracking crop variety.

Currently, farming management information systems (FMISs) are pervasive in farming and a significant factor in the furthering of precision agriculture. Such information systems can track measuring and responding to inter and intra-field variability in crops and farming conditions as well as enhance DDS for farming management. FMISs allow for new opportunities to improve farming and precision agriculture. However, even though FMISs are improving precision farming, present FMISs have limitations and can be dramatically improved upon considering relatively recent advancements in computer engineering and computer science. One problem with previous systems is the collection and organization of information from farming, including the collection and organization of information on variety tracking. This can be a problem since farming conditions and crop variability can vary greatly in the operations from one field to another.

These are just some of the many issues that can be improved upon in farming, and specifically, in precision agriculture as well as crop variety tracking.

### SUMMARY

Described herein are technologies for tracking crop variety in a field while harvesting a crop to improve upon some technical problems in tracking crop variety. Also, the techniques disclosed herein provide specific technical solutions to at least overcome the technical problems mentioned in the background section or other parts of the application as well as other technical problems not described herein but recognized by those skilled in the art.

As mentioned in the background section, variety tracking traditionally begins with the planting operation. Such planting requires an advanced terminal for the recording and documentation of the planting process. When harvest begins, the farmer needs to pull the crop variety information into their harvest terminal if they want to complete the link of planting to harvesting. This link works when the farmer is using recent and new technology that allows for such a transfer of data. If a farmer is not equipped with such technology, then the farmer has to manually track varieties throughout the harvest. Such tasks are even further complicated with modern precision agriculture.

In some embodiments, systems use a look forward camera and recognize current crop characteristics (such as height, color, and density) as well as link these characteristics with a known crop variety. As a harvester harvests a field and the recorded characteristics deviate from an original baseline (along with other pass to pass comparisons), a new variety is triggered and recorded. The operator then has the ability to confirm or decline this new trigger. This allows the operator to build a variety map independent of planting information. Also, in some embodiments, the systems pull the satellite imagery and identify the different varieties from different color spectrums in the satellite imagery.

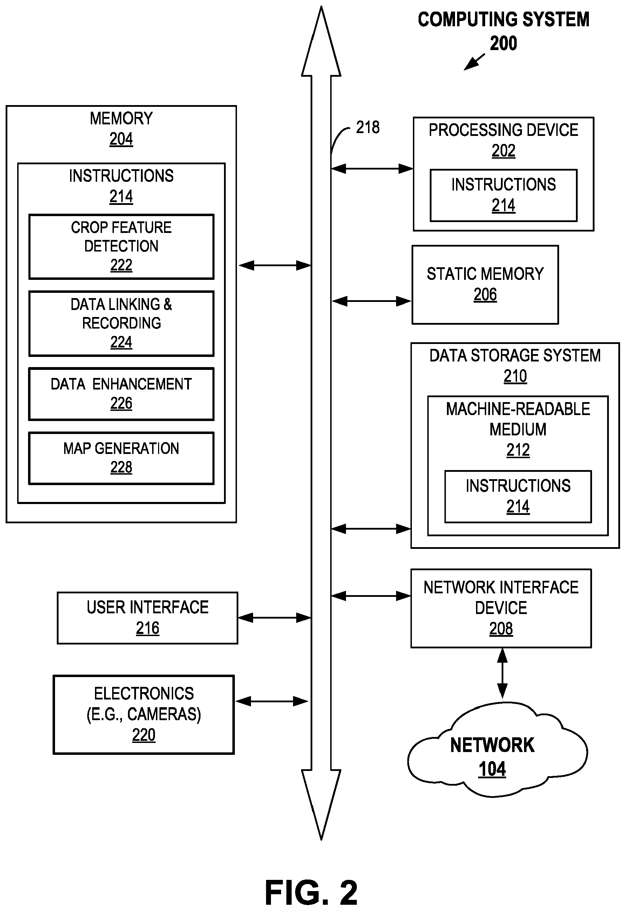

In some embodiments, a camera (e.g., see camera 302 or 304) mounted to a harvester (e.g., see combine harvester 300) captures images of a crop (e.g., see images 700 and 800) and a computing system (e.g., see computing system 200) determines characteristics of the crop (e.g., see characteristics 702, 704, 706, 708A, 804, 806, and 808A) in the images (such as its height, color, and density) (e.g., see crop feature detection instructions 222 shown in FIG. 2). The aforesaid two steps occur continuously as the harvester moves through a field. Also, while the harvester moves through the field, the computing system determines whether the determined characteristics deviate from known characteristics of a first variety of the crop (e.g., see crop feature detection instructions 222). When the determined characteristics deviate from the know characteristics beyond a threshold, the portion of the images containing the deviating characteristics is labeled as including a second variety of the crop (e.g., see label 710 as well as crop feature detection instructions 222). Also, the images are geotagged (e.g., see geotag 712 in images 700 and 800) and the computing system generates a map (e.g., see map 904) of the varieties of the crop based on the labeled and geotagged images (e.g., see map generation instructions 228).

In some embodiments, a system for tracking varieties of a crop in a field while a harvester (e.g., see combine harvester 300) is moving through the field, includes a camera (e.g., see camera 302 or 304) mounted to the harvester and configured to capture images of the crop (e.g., see images 700 and 800). The system also includes a computing system (e.g., see computing system 200) communicatively coupled to the camera and having instructions executable to detect a first variety of the crop within the images of the crop by identifying a physical characteristic of the crop being within a first range of values of the physical characteristic (e.g., see instructions 222 and 226 shown in FIG. 2). Also, the computing system includes instructions executable to record first locations of the harvester as the first variety is being detected in the images (e.g., see instructions 224). Also, the computing system includes instructions executable to associate the first recorded locations with the first variety (e.g., see instructions 224). Further, the computing system includes instructions executable to detect a second variety of the crop within the images of the crop by identifying the physical characteristic of the crop being within a second range of values of the physical characteristic (e.g., see instructions 222). Also, the computing system includes instructions executable to record second locations of the harvester as the second variety is being detected in the images (e.g., see instructions 224). Also, the computing system includes instructions executable to associate the second recorded locations with the second variety (e.g., see instructions 224). And, the computing system includes instructions executable to generate a map (e.g., see map 904) of crop varieties in the field at least according to the first and second recorded locations of the harvester and the associations of the recorded locations with the first and second varieties (e.g., see instructions 228).

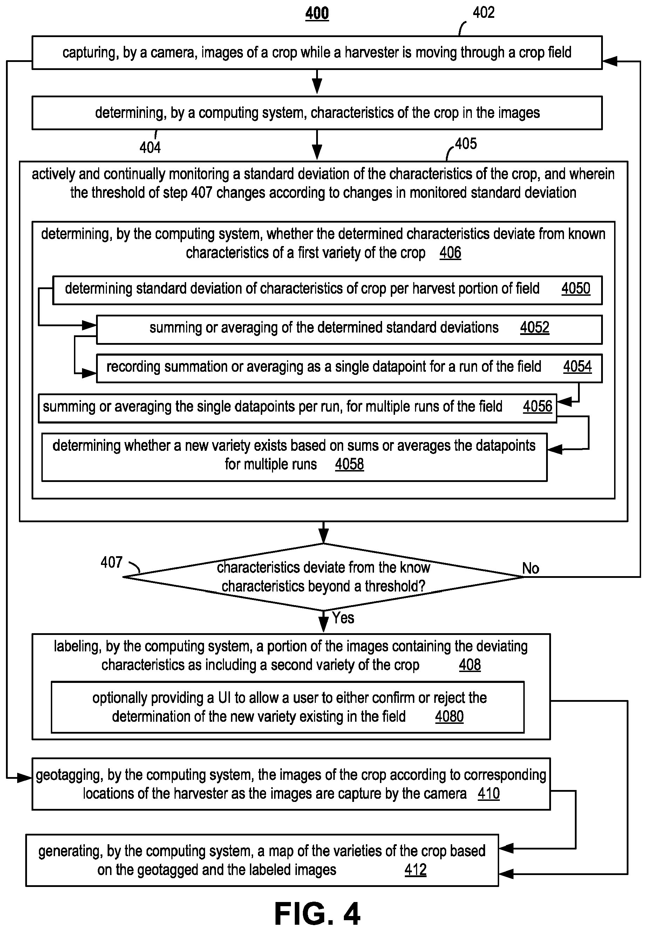

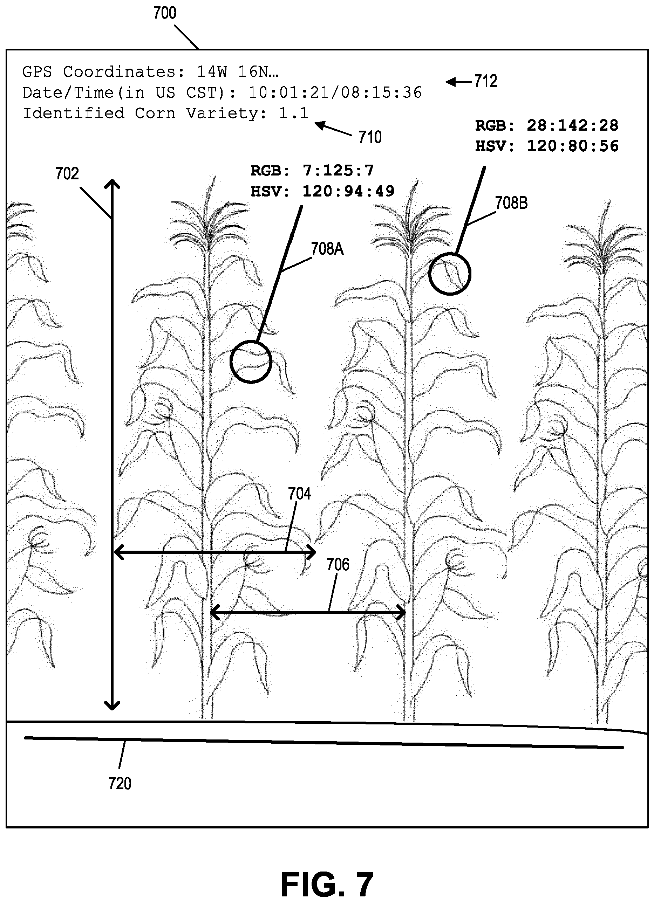

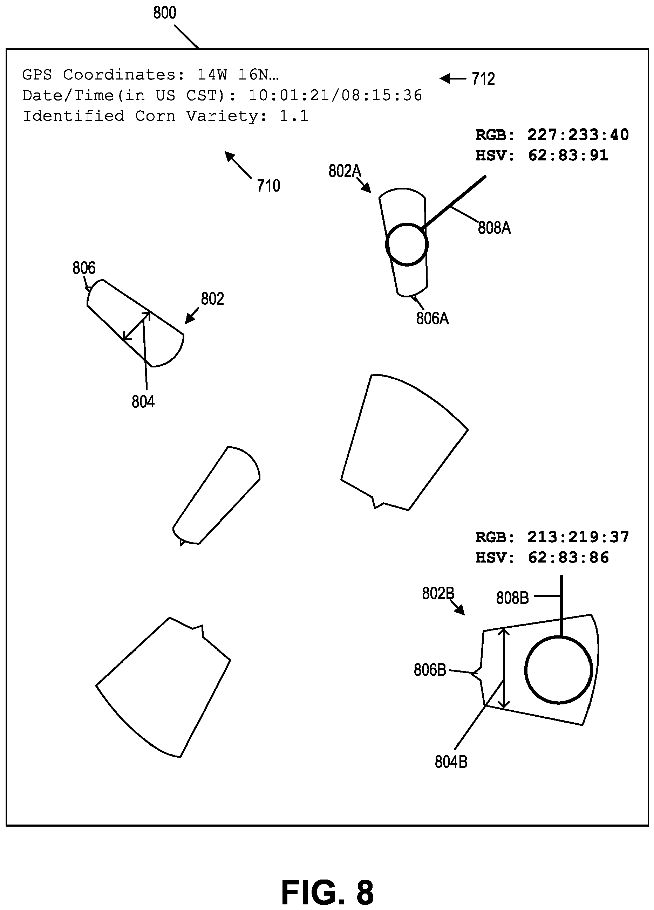

In some embodiments, a method of the technologies includes capturing, by a camera (e.g., see camera 302 or 304) mounted to a harvester (e.g., see combine harvester 300), images of a crop (e.g., see images 700 and 800) while the harvester is moving through a crop field, to track varieties of the crop in the field (e.g., see step 402 shown in FIG. 4). The method also includes determining, by a computing system (e.g., see computing system 200) communicatively coupled to the camera, characteristics of the crop (e.g., see characteristics 702, 704, 706, 708A, 804, 806, and 808A shown in FIGS. 7 and 8 respectively) in the images (e.g., see step 404 shown in FIG. 4). The method also includes determining, by the computing system, whether the determined characteristics deviate from known characteristics of a first variety of the crop (e.g., see step 406). When the determined characteristics deviate from the know characteristics beyond a threshold (such as at step 407 as shown in FIG. 4), the method includes labeling (e.g., see variety label 710), by the computing system, a portion of the images containing the deviating characteristics as including a second variety of the crop instead of including the first variety of the crop (e.g., step 408). Otherwise, the method returns to the previously mentioned steps (such as step 402 as shown in FIG. 4). The method also includes geotagging, by the computing system, the images of the crop according to corresponding locations of the harvester as the images are capture by the camera (e.g., see step 410).

In some embodiments, the method further includes generating, by the computing system (e.g., see computing system 200), a map of the varieties of the crop (e.g., see map 904) based on the geotagged and labeled images, e.g., see geotag 712 in images 700 and 800 (e.g., see step 412 shown in FIG. 4).

In some embodiments, the method includes actively and continually monitoring, by the computing system (e.g., see computing system 200), a standard deviation of the characteristics of the crop in the images (e.g., see images 700 and 800) while the harvester (e.g., see harvester 300) is moving through the field (e.g., see step 405 shown in FIG. 4). In such examples, the threshold changes according to changes in monitored standard deviation.

In some embodiments, the determination of whether the determined characteristics deviate from the known characteristics of the first variety are based on a comparison of characteristics of the crop (e.g., see characteristics 702, 704, 706, 708A, 804, 806, and 808A) in a predetermined sampling of the images (e.g., see images 700 and 800) and the known characteristics of the first variety. In some of such examples, the method further includes actively and continually monitoring, by the computing system (e.g., see computing system 200), a standard deviation of the characteristics of the crop in the images while the harvester (e.g., see combine harvester 300) is moving through the field (e.g., see step 405 shown in FIG. 4). And, in such examples, the threshold changes according to changes in monitored standard deviation. Also, in some of such examples, the method includes determining, by the computing system, a standard deviation of the characteristics of the crop in the images per harvest portion of the field while the harvester is moving through a harvest portion or immediately after the harvester has moved through a harvest portion and has entered into an adjacent headland portion of the field (e.g., see step 4050 shown in FIG. 4). Also, in some of such examples, the method further includes summing or averaging, by the computing system, of the determined standard deviations (e.g., see step 4052) and recording, by the computing system, the summation or the averaging as a single datapoint for a run of the field (e.g., see step 4054). Also, in some embodiments, the method further includes, per run, summing or averaging, by the computing system, the single datapoints for multiple runs of the field (e.g., see step 4056) and determining, by the computing system, whether a new variety exists in the field according to sums or averages the single datapoints for multiple runs of the field (e.g., see step 4058).

In some of aforementioned embodiments and other embodiments, the method further includes optionally providing, by the computing system, a user interface (e.g., see user interface 216 shown in FIG. 2) to allow a user to either confirm or reject the determination of the new variety existing in the field (e.g., see step 4080 shown in FIG. 4). The option to provide the user interface (UI) can be selected beforehand.

In some of aforementioned embodiments and other embodiments, when the computing system (e.g., see computing system 200) determines whether a new variety exists in the field, the computing system considers crop height (e.g., see crop height characteristic 702 shown in FIG. 7), crop color (e.g., see crop color characteristic 708A or 708B), crop density (e.g., see crop density characteristics 704 and 706), or any combination thereof as characteristics of the crop. Also, in some examples, when the computing system determines whether a new variety exists in the field, the computing system further considers one or more secondary factors of the crop, which include yield of the crop, elevation of field, slope of field (e.g., see field slope 720), measured mass of the crop, seed size of the crop (e.g., see kernel width characteristics 804 and 804B shown in FIG. 8), and seed color (e.g., see seed color characteristic 808A or 808B) of the crop.

In some embodiments, weights are used in determining characteristics of the crop in the images (such as at step 404) or in determining whether the determined characteristics deviate from known characteristics of a first variety of the crop (such as at step 406). When weights are used for determining characteristics of the crop in the images different weights can be applied to one or more of crop height, crop color, and crop density. Also, different weights can be applied to one or more of the aforementioned secondary factors of the crop, which include yield of the crop, elevation of field, slope of field, measured mass of the crop, seed size of the crop, and seed color of the crop.

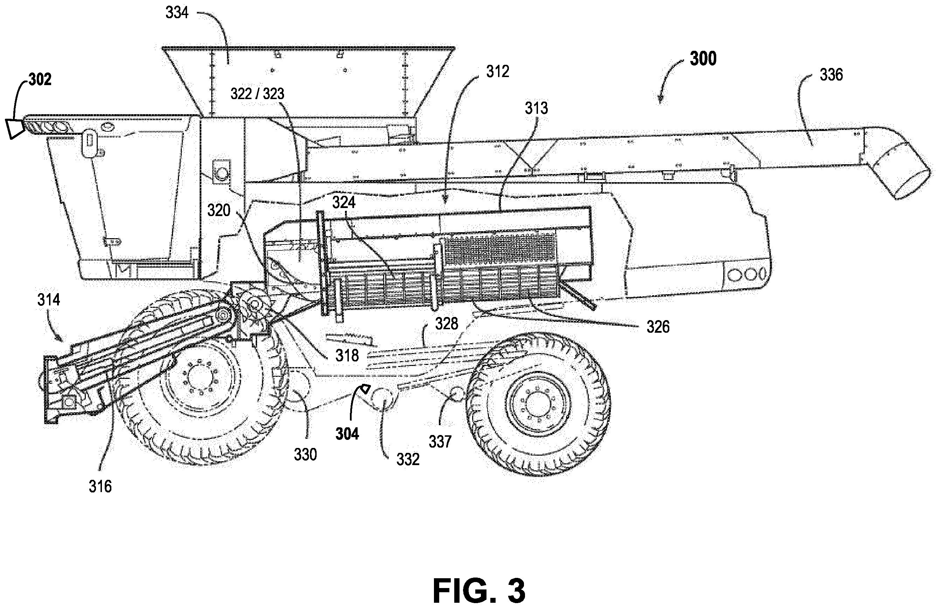

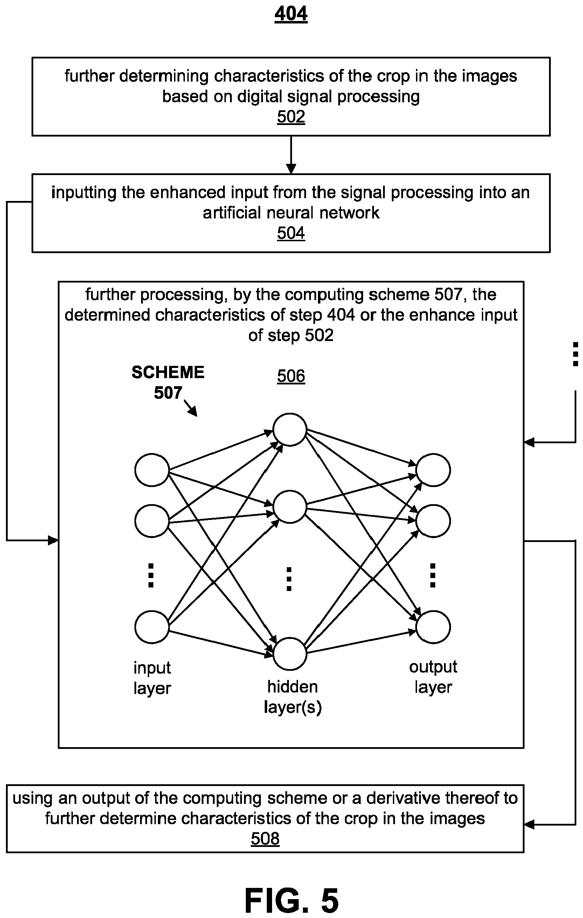

In some embodiments of the method, the determination of characteristics of the crop in the images (e.g., see images 700 and 800) is based at least on digital signal processing (e.g., see step 502 shown in FIG. 5). Also, in some embodiments, the determination of characteristics of the crop in the images is based at least on a computer vision analysis (e.g., see steps 504 to 508 shown in FIG. 5 as well as instructions 226 shown in FIG. 3). Further, in some of such examples, the determination of characteristics of the crop in the images is further based on digital signal processing in addition to the computer vision analysis (e.g., see all the steps of FIG. 5 as well as instructions 226). In some examples, the digital signal processing (such as at step 502) occurs prior to the computer vision analysis as a pre-processing step to generate enhanced input for the computer vision analysis (such as the analysis at step 506 by computing scheme 507). In some embodiments, as shown in FIG. 5, the method step 404 includes, at step 506, processing, by the computing scheme 507, the determined characteristics of step 404 or the enhance input of step 502. For example, at step 404, as shown in FIG. 5, further determining characteristics of the crop in the images based on digital signal processing at step 502. In some embodiments, the method includes inputting the enhanced input from the signal processing into an artificial neural network (e.g., see step 504) and the computer vision analysis includes inputting the enhanced input into an artificial neural network (ANN) (e.g., see step 504 as well as instructions 226). And, the determination of characteristics of the crop in the images is based at least on the output of the ANN (e.g., see step 508). In some cases, as shown in FIG. 5, at step 508, the step 404 continues with using an output of the computing scheme 507 or a derivative thereof to further determine characteristics of the crop in the images and eventually detect the different varieties of the crop. In some examples, the ANN includes or is part of a deep learning process that determines of characteristics of the crop in the images (e.g., see instructions 226). Also, in some examples, the deep learning process includes a convolutional neural network (CNN) (e.g., see instructions 226). Also, in some examples, the deep learning process includes a network of convolutional neural networks (CNNs) (e.g., see instructions 226).

In some examples, the computer vision analysis includes inputting aspects of the images (e.g., see images 700 and 800) or derivatives of aspects of the images into an ANN (e.g., see step 504 as well as instructions 226), and the determination of characteristics of the crop in the images is based at least on the output of the ANN (e.g., see step 508 as well as instructions 226). Also, in such examples, the ANN includes or is part of a deep learning process that determines characteristics of the crop in the images or is a basis for the detection of the different varieties of the crop. And, the deep learning process can include a CNN or a network of CNNs.

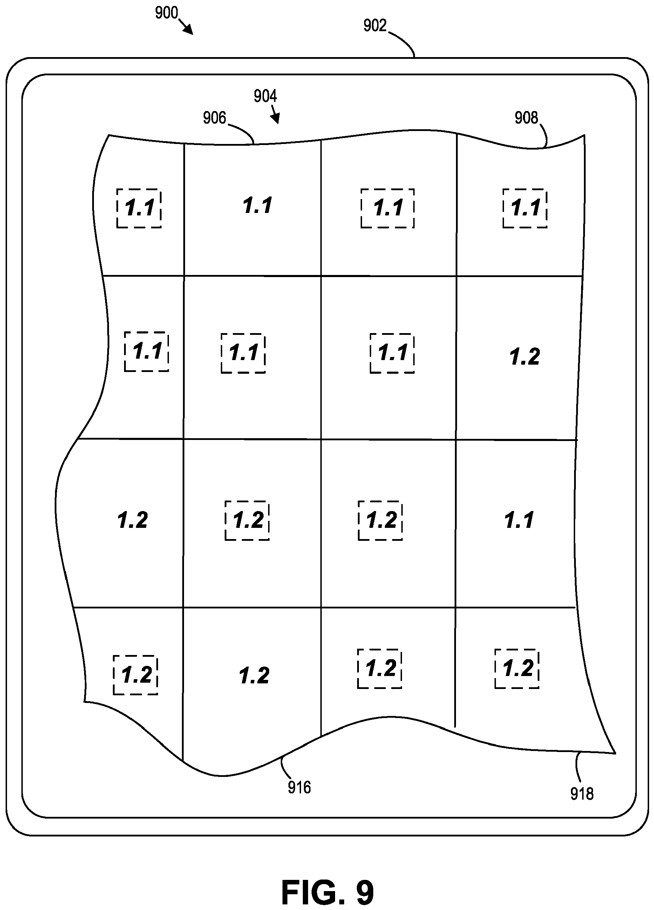

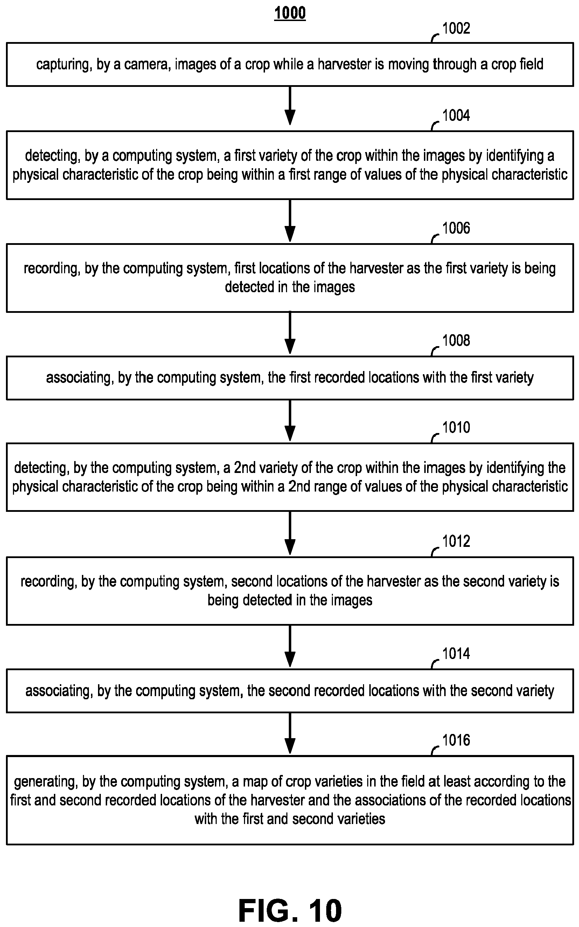

In some embodiments, another method of the technologies includes capturing, by a camera (e.g., see camera 302 or 304) mounted to a harvester (e.g., see combine harvester 300), images of a crop (e.g., see images 700 and 800) while the harvester is moving through a crop field, to track varieties of the crop in the field (e.g., see step 1002 shown in FIG. 10). The method also includes detecting, by a computing system (e.g., see computing system 200) communicatively coupled to the camera, a first variety of the crop within the images of the crop by identifying a physical characteristic of the crop being within a first range of values of the physical characteristic (e.g., see step 1004). The method also includes recording, by the computing system, first locations of the harvester as the first variety is being detected in the images (e.g., see step 1006). The method also includes associating, by the computing system, the first recorded locations with the first variety (e.g., see step 1008). The method also includes detecting, by the computing system, a second variety of the crop within the images of the crop by identifying the physical characteristic of the crop being within a second range of values of the physical characteristic (e.g., see step 1010). The method also includes recording, by the computing system, second locations of the harvester as the second variety is being detected in the images (e.g., see step 1012). Also, the method includes associating, by the computing system, the second recorded locations with the second variety (e.g., see step 1014). In some embodiments, the method includes generating, by the computing system, a map of crop varieties (e.g., see map 904 shown in FIG. 9) in the field at least according to the first and second recorded locations of the harvester and the associations of the recorded locations with the first and second varieties (e.g., see step 1016).

In some embodiments of the method, the identification of the physical characteristic of the crop being within a certain range of values is based at least on digital signal processing. In some instances, the identification of the physical characteristic of the crop being within a certain range of values is based at least on a computer vision analysis. Also, the identification of the physical characteristic of the crop being within a certain range of values can be further based on digital signal processing. The digital signal processing can occur prior to the computer vision analysis as a pre-processing step to generate enhanced input for the computer vision analysis. The computer vision analysis can include inputting the enhanced input into an ANN, and the detecting of the different varieties of the crop can be based at least on the output of the ANN. The ANN can include or be a part of a deep learning process that detects the different varieties of the crop or is a basis for the detection of the different varieties of the crop. The deep learning process can include a CNN or a network of CNNs. In some embodiments, the computer vision analysis includes inputting aspects of the images or derivatives of aspects of the images into an ANN and the detecting of the different varieties of the crop is based at least on the output of the ANN. In such examples, the ANN can include or is part of a deep learning process that detects the different varieties of the crop or is a basis for the detection of the different varieties of the crop. And, the deep learning process includes a CNN or a network of CNNs.

In some embodiments of the method, the physical characteristic is crop height, crop color, crop density, crop reflectiveness or any combination thereof. In some embodiments, the physical characteristic is crop height only. In some embodiments, the physical characteristic is crop color only. In some embodiments, the physical characteristic is crop reflectiveness only. In some embodiments, the physical characteristic is crop density only.

In some embodiments, the first range of values of the physical characteristic is predetermined prior to the harvester moving through the field. In such examples, the second range of values of the physical characteristic may not be predetermined prior to the harvester moving through the field and can be determined while the harvester moving through the field.

In some embodiments, an operator of the harvester has the ability to confirm or decline the associating of the first recorded locations to the first variety or the associating of the second recorded locations to the second variety.

In some embodiments, the method further includes identifying the different varieties from different color spectrums in satellite imagery of the crop field to corroborate the generated map of crop varieties as well providing, via a user interface (e.g., see user interface 216), a confidence level of the map that is determined according to a comparison between the map and the satellite imagery.

The systems and methods described herein overcome some technical problems in farming, in general, as well as some technical problems in tracking crop variety, specifically. Also, the techniques disclosed herein provide specific technical solutions to at least overcome the technical problems mentioned in the background section or other parts of the application as well as other technical problems not described herein but recognized by those skilled in the art.

With respect to some embodiments, disclosed herein are computerized methods for tracking crop variety, as well as a non-transitory computer-readable storage medium for carrying out technical operations of the computerized methods. The non-transitory computer-readable storage medium has tangibly stored thereon, or tangibly encoded thereon, computer readable instructions that when executed by one or more devices (e.g., one or more personal computers or servers) cause at least one processor to perform a method for improved systems and methods for tracking crop variety.

With respect to some embodiments, a system is provided that includes at least one computing device configured to provide improved ways for tracking crop variety. And, with respect to some embodiments, a method, such as one of the aforesaid methods, is provided to be performed by at least one computing device. In some example embodiments, computer program code can be executed by at least one processor of one or more computing devices to implement functionality in accordance with at least some embodiments described herein; and the computer program code being at least a part of or stored in a non-transitory computer-readable medium.

These and other important aspects of the invention are described more fully in the detailed description below. The invention is not limited to the particular methods and systems described herein. Other embodiments can be used and changes to the described embodiments can be made without departing from the scope of the claims that follow the detailed description.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The present disclosure will be understood more fully from the detailed description given below and from the accompanying drawings of various embodiments of the disclosure. Embodiments of the invention will now be described, by way of example, with reference to the accompanying drawings, in which:
FIG. 1 illustrates an example network of combine harvesters that communicate with a computing system through a communication network, in accordance with some embodiments of the present disclosure;
FIG. 2 illustrates is a block diagram of example aspects of a computing system (such as one of the computing systems shown in FIG. 1), in accordance with some embodiments of the present disclosure;
FIG. 3 illustrates a schematic side view of a combine harvester (such as one of the combine harvesters shown in FIG. 1) with some portions of the harvester being broken away to reveal internal details of construction, in accordance with some embodiments of the present disclosure;
FIGS. 4, 5, and 10 illustrate methods in accordance with some embodiments of the present disclosure;
FIG. 6 illustrates an example image of wheat kernels at three separate stages of image processing in a determination of characteristics of a crop, in accordance with some embodiments of the present disclosure;
FIG. 7 illustrates an example image of crops in a field derived from image data, in accordance with some embodiments of the present disclosure;
FIG. 8 illustrates an example image of corn kernels derived from image data, in accordance with some embodiments of the present disclosure; and
FIG. 9 illustrates a display of a user interface device displaying a map of the varieties of a crop in a field based on labeled and geotagged images, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications and equivalents as will become apparent from consideration of the following detailed description and other parts of this disclosure.

Described herein are technologies for tracking crop variety in a field while harvesting a crop to improve upon some technical problems in tracking crop variety. Also, the techniques disclosed herein provide specific technical solutions to at least overcome the technical problems mentioned in the background section or other parts of the application as well as other technical problems not described herein but recognized by those skilled in the art.

As mentioned in the background section, variety tracking traditionally begins with the planting operation. Such planting requires an advanced terminal for the recording and documentation of the planting process. When harvest begins, the farmer needs to pull the crop variety information into their harvest terminal if they want to complete the link of planting to harvesting. This link works when the farmer is using recent and new technology that allows for such a transfer of data. If a farmer is not equipped with such technology, then the farmer has to manually track varieties throughout the harvest. Such tasks are even further complicated with modern precision agriculture.

In some embodiments, systems use a look forward camera and recognize current crop characteristics (such as height, color, and density) as well as link these characteristics with a known crop variety. As a harvester harvests a field and the recorded characteristics deviate from an original baseline (along with other pass to pass comparisons), a new variety is triggered and recorded. The operator then has the ability to confirm or decline this new trigger. This allows the operator to build a variety map independent of planting information. Also, in some embodiments, the systems pull the satellite imagery and identify the different varieties from different color spectrums in the satellite imagery.

In some embodiments, using existing image processing techniques and slight modification to existing hardware, the camera can capture images as the crop is harvested and each image can be linked with a geospatial location. The attributes of the crop then can be compared to a defined number of samples with the standard deviation actively being monitored. At any point which the standard deviation is greater than a defined threshold, a new variety could be triggered as long as the standard deviation returned within the allowable threshold.

In some embodiments, a simple method for capturing a standard deviation can be considered from pass to pass. Thus, as the combined transitioned from a harvest state to headland state to harvest state, the sum of an entire run can be averaged and a recorded as a single data point. As multiple runs occur and more data points are recorded, the standard deviation from run to run is compared actively checking for a new variety. Once a new variety is detected, the operator can either confirm and name the new variety or decline. In some embodiments, in a more complex method or system, the computing system will not only consider the various crop properties (such as height, density, reflectiveness, color, or grain moisture) but also consider yield, elevation, slope, measured mass, seed size, and seed color. The computing system can also actively monitor the different properties while comparing each property independently regardless of a harvest or a headland state change. When a significant deviation is detected from the most adjacent or sequential data point, the system will automatically flag a new variety.

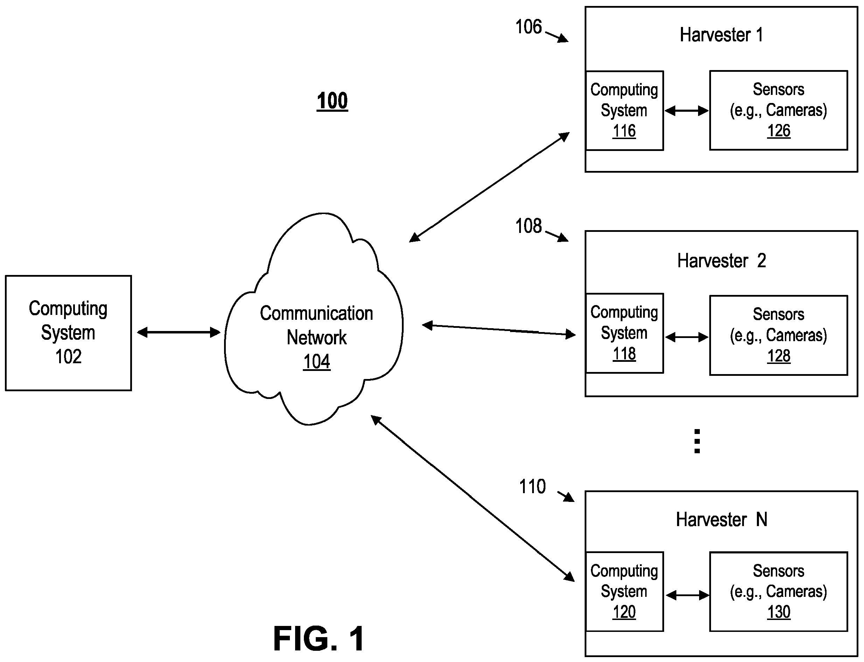

FIG. 1 illustrates a network 100 of farming machines that communicate with remote computing systems through a communications network 104. Specifically, FIG. 1 illustrates the network 100 including a remote computing system 102, the communications network 104, farming machines (e.g., see farming machines 106, 108, and 110). The remote computing system (e.g., see remote computing system 102) is remote in that it is physically and geographically separated from the farming machines of the network 100. The farming machines are shown communicating with the remote computing system 102 of the network 100 through a communications network 104. As shown in FIG. 1, the farming machines of the network 100 can each include its own computing system including electronics such as connected sensors, cameras, busses, and computers (e.g., see computing systems 116, 118, and 120, and see electronics 126, 128, and 130). A computing system of a farming machine can include a processor, memory, a communication interface and one or more sensors that can make the farming machines individual computing devices. In the case of the communications network 104 including the Internet, the farming machines of the network 100 are considered Internet of Things (IoT) devices. Also, in some embodiments, the remote computing system 102 is a part of a cloud computing system.

As shown in FIG. 1, each one of the farming machines includes a respective computer and respective electronics (e.g., see computing systems 116, 118, and 120, and see electronics 126, 128, and 130). In some embodiments, the electronics of a farming machine include electronic hardware and software of the farming machine such as sensors and other types of electrical and/or mechanical feedback devices that are communicatively coupled with the computer of the farming machine, such as cameras (e.g., see cameras 302 and 304 of combine harvester 300 shown in FIG. 3). And, in some embodiments, the computer of the farming machine is configured to connect or integrate with the farming machine electronics (e.g., see electronics 126, 128, and 130) and communicate with a remote computing system (such as the remote computing system 102) via the communications network 104.

In some embodiments, the farming machine (e.g., see farming machine 106, 108, or 110) includes a vehicle. In some embodiments, the farming machine is a combine harvester (e.g., see combine harvester 300 show in FIG. 3). In some embodiments, the farming machine is a tractor. In some embodiments, the farming machine is a planter. In some embodiments, the farming machine is a sprayer. In some embodiments, the farming machine is a baler. In some embodiments, the farming machine is or includes a harvester, a planter, a sprayer, a baler, any other type of farming implement, or any combination thereof. In some of such embodiments, the farming machine can be or include a vehicle in that is self-propelling. Also, in some embodiments, the group of similar farming machines is a group of vehicles (e.g., see farming machines 106, 108, and 110). In some embodiments, the group of vehicles is a group of combine harvesters. And, in some embodiments, the group of vehicles is a group of combine harvesters, planters, sprayers, balers, another type of implement, or any combination thereof.

The communications network 104 includes one or more local area networks (LAN(s)) and/or one or more wide area networks (WAN(s)). In some embodiments, the communications network 104 includes the Internet and/or any other type of interconnected communications network. The communications network 104 can also include a single computer network or a telecommunications network. More specifically, in some embodiments, the communications network 104 includes a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including remote computing system 102, communications network 104, and farming machines 106, 108, and 110) can be or include a computing system which includes memory that includes media. The media includes or is volatile memory components, non-volatile memory components, or a combination of thereof. In general, in some embodiments, each of the computing systems includes a host system that uses memory. For example, the host system writes data to the memory and read data from the memory. The host system is a computing device that includes a memory and a data processing device. The host system includes or is coupled to the memory so that the host system reads data from or writes data to the memory. The host system is coupled to the memory via a physical host interface. The physical host interface provides an interface for passing control, address, data, and other signals between the memory and the host system.

FIG. 2 illustrates is a block diagram of example aspects of a computing system 200, which can be or include any one of the computers or computing systems shown in FIG. 1 (e.g., see computing systems 102, 116, 118, and 120). FIG. 2 illustrates parts of the computing system 200 within which a set of instructions, for causing a machine (such as a computer processor or processing device 202) to perform any one or more of the methodologies discussed herein performed by a computing system, are executed (e.g., see the method steps of method 400 as well as the method steps of method 1000 shown in FIGS. 4, 5 and 10 respectively). In some embodiments, the computing system 200 operates with additional computing systems (e.g., such as additional remote computing systems) to provide increased computing capacity in which multiple computing systems operate together to perform any one or more of the methodologies discussed herein that are performed by a computing system. In some embodiments, the computing system 200 corresponds to a host system that includes, is coupled to, or utilizes memory or is used to perform the operations performed by any one of the computing systems described herein. In some embodiments, the machine is connected (e.g., networked) to other machines in a LAN, an intranet, an extranet, or the Internet. In some embodiments, the machine operates in the capacity of a server in client-server network environment, as a peer machine in a peer-to-peer (or distributed) network environment, or as a server in a cloud computing infrastructure or environment. In some embodiments, the machine is a personal computer (PC), a tablet PC, a cellular telephone, a web appliance, a server, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein performed by computing systems.

The computing system 200 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 218. The processing device 202 represents one or more general-purpose processing devices such as a microprocessor, a central processing unit, or the like. More particularly, the processing device can include a microprocessor or a processor implementing other instruction sets, or processors implementing a combination of instruction sets. Or, the processing device 202 is one or more special-purpose processing devices such as an application specific integrated circuit (ASIC), a field programmable gate array (FPGA), a digital signal processor (DSP), network processor, or the like. The processing device 202 is configured to execute instructions 214 for performing the operations discussed herein performed by a computing system. In some embodiments, the computing system 200 includes a network interface device 208 to communicate over the communications network 104 shown in FIG. 1.

The data storage system 210 includes a machine-readable storage medium 212 (also known as a computer-readable medium) on which is stored one or more sets of instructions 214 or software embodying any one or more of the methodologies or functions described herein performed by a computing system. The instructions 214 also reside, completely or at least partially, within the main memory 204 or within the processing device 202 during execution thereof by the computing system 200, the main memory 204 and the processing device 202 also constituting machine-readable storage media.

In some embodiments, the instructions 214 include specific instructions to implement functionality described herein related to the methods described herein and that can correspond to any one of the computing devices, data processors, user interface devices, and I/O devices described herein related to a computing system. For example, the instructions 222 include crop feature detection instructions 222, data linking and recording instructions 224, data enhancement instructions 226, and map generation instructions 228. In some embodiments, the data enhancement instructions include different types of data analysis libraries as well different types of data processing libraries--including various mathematical and statistical modeling and operations libraries and machine learning, artificial intelligence, and deep learning libraries as well as specific libraries for ANN and CNN data processing and for training ANNs, CNNs and other types of computing schemes or systems.

While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure performed a computing system. The term "machine-readable storage medium" shall accordingly be taken to include solid-state memories, optical media, or magnetic media.

Also, as shown, the computing system 200 includes user interface 216 that includes a display, in some embodiments, and, for example, implements functionality corresponding to any one of the user interface devices disclosed herein. A user interface, such as user interface 216, or a user interface device described herein includes any space or equipment where interactions between humans and machines occur. A user interface described herein allows operation and control of the machine from a human user, while the machine simultaneously provides feedback information to the user. Examples of a user interface (UI), or user interface device include the interactive aspects of computer operating systems (such as graphical user interfaces), machinery operator controls, and process controls. A UI described herein includes one or more layers, including a human-machine interface (HMI) that interfaces machines with physical input hardware and output hardware.

Also, as shown, the computing system 200 includes farming machine electronics 220 that includes sensors, cameras, or other types of electrical and/or mechanical feedback devices, one or more user interfaces (e.g., any one of the UI described herein), and any type of computer hardware and software configured to interface and communicatively couple to operational components of a farming machine (e.g., see electronics 126, 128, and 130). Also, in some embodiments, the farming machine electronics 220 as well as the electronics 126, 128, and 130 include any one of the cameras described herein for capturing images of crop (e.g., see cameras 302 and 304 show in FIG. 3).

In some systems of the technologies disclosed herein, any steps of embodiments of the methods described herein are implementable by executing instructions corresponding to the steps, which are stored in memory (e.g., see instructions 214, 222, 224, 226, and 228 shown in FIG. 2).

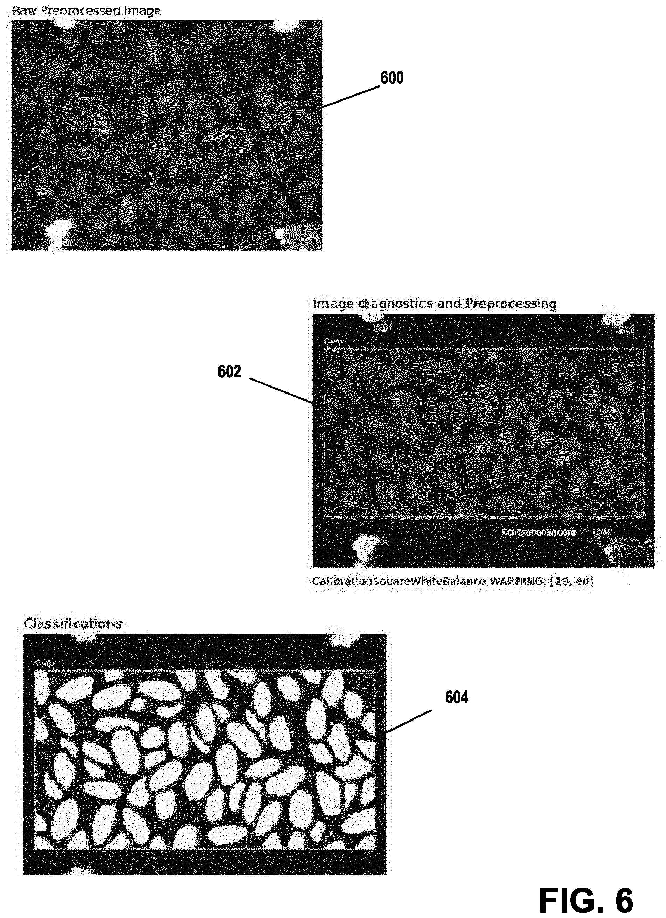

FIG. 3 illustrates a schematic side view of a combine harvester 300 (such as one of the combine harvesters shown in FIG. 1) with some portions of the harvester being broken away to reveal internal details of construction. As shown in FIG. 3, the combine harvester 300 includes at least two cameras. The at least two cameras include a first camera 302 mounted to the harvester 300 at the front of the harvester. The first camera 302 is configured to capture images of crop while the crop is being harvested or just before the crop is harvested (e.g., see image 700 shown in FIG. 7). The at least two cameras also include a second camera 304 mounted to the combine harvester 300 in a crop processing section of the harvester. For example, the second camera 304 is mounted near the clean grain auger 332 that delivers the clean grain to an elevator (not shown) that elevates the grain to a storage bin 334 on top of the combine harvester 300, from which it is ultimately unloaded via an unloading spout 336. The second camera 304 is configured to capture images of crop after the crop has been harvested. Also, in some instances, such as the one shown in FIG. 3, the second camera 304 is configured to capture images of the crop after the crop has been processed to at least some extent by the combine harvester 300 (e.g., see the images shown in FIGS. 6 and 8, respectively).

The combine harvester 300 has processing system 312 that extends generally parallel with the path of travel of the harvester. It is to be understood that such a harvester is being used to illustrate principals herein and the subject matter described herein is not limited to harvesters with processing systems designed for axial flow, nor to axial flow harvesters having only a single processing system. The combine harvester 300 also includes a harvesting header (not shown) at the front of the machine that delivers collected crop materials to the front end of a feeder house 314. Such materials are moved upwardly and rearwardly within feeder house 314 by a conveyer 316 until reaching a beater 318 that rotates about a transverse axis. Beater 318 feeds the material upwardly and rearwardly to a rotary processing device, in the illustrated instance to a rotor 322 having an infeed auger 320 on the front end thereof. Infeed auger 320, in turn, advances the materials axially into the processing system 312 for threshing and separating. The processing system 312 is housed by processing system housing 313. In other types of systems, conveyer 316 may deliver the crop directly to a threshing cylinder.

The crop materials entering processing system 312 can move axially and helically therethrough during threshing and separating. During such travel, the crop materials are threshed and separated by rotor 322 operating in chamber 323 which concentrically receives the rotor 322. The lower part of the chamber 323 contains concave assembly 324 and a separator grate assembly 326. Rotation of the rotor 322 impels the crop material rearwardly in a generally helical direction about the rotor 322. A plurality of rasp bars and separator bars (not shown) mounted on the cylindrical surface of the rotor 322 cooperate with the concave assembly 324 and separator grate assembly 326 to thresh and separate the crop material, with the grain escaping laterally through concave assembly 324 and separator grate assembly 326 into cleaning mechanism 328. Bulkier stalk and leaf materials are retained by the concave assembly 324 and the separator grate assembly 326 and are impelled out the rear of processing system 312 and ultimately out of the rear of the combine harvester 300.

A blower 330 forms part of the cleaning mechanism 328 and provides a stream of air throughout the cleaning region below processing system 312 and directed out the rear of the combine harvester 300 so as to carry lighter chaff particles away from the grain as it migrates downwardly toward the bottom of the machine to a clean grain auger 332. Since the grain is cleaned by the blower 330 by the time it reaches the auger 332, in some embodiments the camera for capturing images of the crop is mounted near the auger 332 facing a section that conveys the cleaned grain (e.g., see camera 304). Clean grain auger 332 delivers the clean grain to an elevator (not shown) that elevates the grain to a storage bin 334 on top of the combine harvester 300, from which it is ultimately unloaded via an unloading spout 336. A returns auger 337 at the bottom of the cleaning region is operable in cooperation with other mechanism (not shown) to reintroduce partially threshed crop materials into the front of processing system 312 for an additional pass through the processing system 312.

FIGS. 4 and 5 as well as FIG. 10 illustrate methods 400 and 1000, respectively, in accordance with various embodiments of the present disclosure. Methods 400 and 1000 are performed by any one of the cameras and any one of the computing systems described herein (e.g., see computing system 200 and electronics 220 as well as cameras 302 and 304). Methods 400 and 1000 are alternative embodiments; however, aspects of the two methods can be combined to make a greater or more specific method. And, such a combination is to be considered part of this disclosure. The method shown in FIG. 5 is a sub-method of the method step 404, which is a method step included in method 400.

As shown in FIG. 4, method 400 begins with step 402, which includes capturing, by a camera (e.g., see camera 302 or 304) mounted to a harvester (e.g., see combine harvester 300), images of a crop (e.g., see images 700 and 800) while the harvester is moving through a crop field, to track varieties of the crop in the field. At step 404, the method 400 continues with determining, by a computing system (e.g., see computing system 200) communicatively coupled to the camera, characteristics of the crop in the images (e.g., see characteristics 702, 704, 706, 708A, 804, 806, and 808A shown in FIGS. 7 and 8 respectively). The method 400 also includes, at step 406, determining, by the computing system, whether the determined characteristics deviate from known characteristics of a first variety of the crop. When the determined characteristics deviate from the know characteristics beyond a threshold (such as at step 407), the method 400 includes labeling (e.g., see variety label 710), by the computing system, a portion of the images containing the deviating characteristics as including a second variety of the crop instead of including the first variety of the crop, at step 408. Otherwise, the method 400 returns to the previously mentioned steps (such as step 402 and then step 404). The method 400, at step 410, also includes geotagging, by the computing system, the images of the crop according to corresponding locations of the harvester as the images are capture by the camera. As shown, the method 400, at step 412, further includes generating, by the computing system, a map of the varieties of the crop (e.g., see map 904) based on the geotagged and labeled images, e.g., see label 710 and geotag 712 in images 700 and 800.

Also, the method 400, at step 405, includes actively and continually monitoring, by the computing system (e.g., see computing system 200), a standard deviation of the characteristics of the crop in the images (e.g., see images 700 and 800) while the harvester (e.g., see combine harvester 300) is moving through the field. In such examples, the threshold changes according to changes in monitored standard deviation. In some embodiments, as shown in FIG. 4, the determination of whether the determined characteristics deviate from the known characteristics of the first variety are based on a comparison of characteristics of the crop (e.g., see characteristics 702, 704, 706, 708A, 804, 806, and 808A) in a predetermined sampling of the images (e.g., see images 700 and 800) and the known characteristics of the first variety. In some of such examples, the method further includes step 405 that includes actively and continually monitoring, by the computing system (e.g., see computing system 200), a standard deviation of the characteristics of the crop in the images while the harvester (e.g., see harvester 300) is moving through the field. And, in such examples, the threshold changes according to changes in monitored standard deviation. Also, in some of such examples, as shown in FIG. 4, the method 400 includes determining, by the computing system, a standard deviation of the characteristics of the crop in the images per harvest portion of the field while the harvester is moving through a harvest portion or immediately after the harvester has moved through a harvest portion and has entered into an adjacent headland portion of the field--at step 4050. Also, the method 400 further includes summing or averaging, by the computing system, of the determined standard deviations (at step 4052) and recording, by the computing system, the summation or the averaging as a single datapoint for a run of the field (at step 4054). Also, the method 400 further includes, per run, summing or averaging, by the computing system, the single datapoints for multiple runs of the field (at step 4056) and determining, by the computing system, whether a new variety exists in the field according to sums or averages the single datapoints for multiple runs of the field (at step 4058).

Also shown in FIG. 4, the method 400 further includes optionally providing, by the computing system, a user interface (e.g., see user interface 216 shown in FIG. 2) to allow a user to either confirm or reject the determination of the new variety existing in the field (at step 4080). The option to provide the UI can be selected before commencement of method 400.

In some of aforementioned embodiments and other embodiments, when the computing system (e.g., see computing system 200) determines whether a new variety exists in the field, the computing system considers crop height (e.g., see crop height characteristic 702 shown in FIG. 7), crop color (e.g., see crop color characteristic 708A or 708B), crop density (e.g., see crop density characteristics 704 and 706), or any combination thereof as characteristics of the crop. Also, in some examples, when the computing system determines whether a new variety exists in the field, the computing system further considers one or more secondary factors of the crop, which include yield of the crop, elevation of field, slope of field (e.g., see field slope 720), measured mass of the crop, seed size of the crop (e.g., see kernel width characteristics 804 and 804B shown in FIG. 8), and seed color (e.g., see seed color characteristic 808A or 808B) of the crop.

In some embodiments, weights are used in determining characteristics of the crop in the images (such as at step 404) or in determining whether the determined characteristics deviate from known characteristics of a first variety of the crop (such as at step 406). When weights are used for determining characteristics of the crop in the images different weights can be applied to one or more of crop height, crop color, and crop density. Also, different weights can be applied to one or more of the aforementioned secondary factors of the crop, which include yield of the crop, elevation of field, slope of field, measured mass of the crop, seed size of the crop, and seed color of the crop.

In some embodiments of the method 400, the determination of characteristics of the crop in the images (e.g., see images 700 and 800) is based at least on digital signal processing (e.g., see step 502 shown in FIG. 5). Also, in some embodiments, the determination of characteristics of the crop in the images is based at least on a computer vision analysis (e.g., see steps 504 to 508 shown in FIG. 5 as well as instructions 226 shown in FIG. 3). Further, in some of such examples, the determination of characteristics of the crop in the images is further based on digital signal processing in addition to the computer vision analysis (e.g., see all the steps of FIG. 5 as well as instructions 226). As shown in FIG. 5, in some examples, the digital signal processing (such as at step 502) occurs prior to the computer vision analysis as a pre-processing step to generate enhanced input for the computer vision analysis (such as the analysis at step 506 by computing scheme 507). In some embodiments, as shown in FIG. 5, the method step 404 includes, at step 506, processing, by the computing scheme 507, the determined characteristics of step 404 or the enhance input of step 502. For example, at step 404, as shown in FIG. 5, further determining characteristics of the crop in the images based on digital signal processing at step 502. In some embodiments, the method includes inputting the enhanced input from the signal processing into an artificial neural network (e.g., see step 504) and the computer vision analysis includes inputting the enhanced input into an ANN (e.g., see step 504 as well as instructions 226). And, the detecting of the different varieties of the crop is based at least on the output of the ANN (e.g., see step 508). In some cases, as shown in FIG. 5, at step 508, the step 404 continues with using an output of the computing scheme 507 or a derivative thereof to further determine characteristics of the crop in the images and eventually detect the different varieties of the crop. In some examples, the ANN includes or is part of a deep learning process that detects the different varieties of the crop or is a basis for the detection of the different varieties of the crop (e.g., see instructions 226). Also, in some examples, the deep learning process includes a convolutional neural network (CNN) (e.g., see instructions 226). Also, in some examples, the deep learning process includes a network of convolutional neural networks (CNNs) (e.g., see instructions 226).

In some examples, the computer vision analysis includes inputting aspects of the images (e.g., see images 700 and 800) or derivatives of aspects of the images into an ANN (e.g., see step 504 as well as instructions 226), and the detecting of the different varieties of the crop is based at least on the output of the ANN (e.g., see step 508 as well as instructions 226). Also, in such examples, the ANN includes or is part of a deep learning process that detects the different varieties of the crop or is a basis for the detection of the different varieties of the crop. And, the deep learning process can include a CNN or a network of CNNs.

As shown in FIG. 10, method 1000 begins with step 1002, which includes capturing, by a camera (e.g., see camera 302 or 304) mounted to a harvester (e.g., see harvester 300), images of a crop (e.g., see images 700 and 800) while the harvester is moving through a crop field, to track varieties of the crop in the field. At step 1004, the method 1000continues with detecting, by a computing system (e.g., see computing system 200) communicatively coupled to the camera, a first variety of the crop within the images of the crop by identifying a physical characteristic of the crop being within a first range of values of the physical characteristic. The method 1000 also includes, at step 1006, recording, by the computing system, first locations of the harvester as the first variety is being detected in the images. The method 1000, at step 1008, also includes associating, by the computing system, the first recorded locations with the first variety. The method 1000, at step 1010, also includes detecting, by the computing system, a second variety of the crop within the images of the crop by identifying the physical characteristic of the crop being within a second range of values of the physical characteristic. The method 1000, at step 1012, also includes recording, by the computing system, second locations of the harvester as the second variety is being detected in the images. Also, the method 1000, at step 1014, includes associating, by the computing system, the second recorded locations with the second variety. Finally, at step 1016, the method 1000 includes generating, by the computing system, a map of crop varieties in the field (e.g., see map 904 shown in FIG. 9) at least according to the first and second recorded locations of the harvester and the associations of the recorded locations with the first and second varieties.

In some embodiments of the method 1000, the identification of the physical characteristic of the crop being within a certain range of values is based at least on digital signal processing. In some instances, the identification of the physical characteristic of the crop being within a certain range of values is based at least on a computer vision analysis. Also, the identification of the physical characteristic of the crop being within a certain range of values can be further based on digital signal processing. The digital signal processing can occur prior to the computer vision analysis as a pre-processing step to generate enhanced input for the computer vision analysis. The computer vision analysis can include inputting the enhanced input into an ANN, and the detecting of the different varieties of the crop can be based at least on the output of the ANN. The ANN can include or be a part of a deep learning process that detects the different varieties of the crop or is a basis for the detection of the different varieties of the crop. The deep learning process can include a CNN or a network of CNNs. In some embodiments, the computer vision analysis includes inputting aspects of the images or derivatives of aspects of the images into an ANN and the detecting of the different varieties of the crop is based at least on the output of the ANN. In such examples, the ANN can include or is part of a deep learning process that detects the different varieties of the crop or is a basis for the detection of the different varieties of the crop. And, the deep learning process includes a CNN or a network of CNNs.

In some embodiments of the method 1000, the physical characteristic is crop height, crop color, crop density, crop reflectiveness or any combination thereof. In some embodiments, the physical characteristic is crop height only. In some embodiments, the physical characteristic is crop color only. In some embodiments, the physical characteristic is crop reflectiveness only. In some embodiments, the physical characteristic is crop density only. In some embodiments of the method 1000, the first range of values of the physical characteristic is predetermined prior to the harvester moving through the field. In such examples, the second range of values of the physical characteristic may not be predetermined prior to the harvester moving through the field and can be determined while the harvester moving through the field. In some embodiments of the method 1000, an operator of the harvester has the ability to confirm or decline the associating of the first recorded locations to the first variety or the associating of the second recorded locations to the second variety. In some embodiments of the method 1000, the method further includes identifying the different varieties from different color spectrums in satellite imagery of the crop field to corroborate the generated map of crop varieties as well providing, via a user interface (e.g., see user interface 216), a confidence level of the map that is determined according to a comparison between the map and the satellite imagery.

FIG. 6 illustrates an example image of wheat kernels at three separate stages of image processing in a determination of characteristics of a crop. The image at stage 600 is a raw preprocessed image such an image captured at step 402 of method 400, in which a camera mounted to a harvester captures images of a crop while the harvester is moving through a crop field. The image at stage 602 has been through image preprocessing and image diagnostics. As part of the preprocessing of the image at stage 602 the image has been cropped to focus on identification of physical characteristics of the crop. The cropping at stage 602 selects an area of the image that has greater light intensities and that allows for more precise computer vision analysis. The image at stage 604 has been through additional image processing, which further enhances the computer vision analysis, especially when determining physical characteristics such as seed or kernel size and shape. In some embodiments, the preprocessing illustrated in stages 602 and 604 can be a part of the preprocessing in step 502 shown in FIG. 5. Also, for example, the stage 604 of the image can be input for the scheme 507 shown in FIG. 5 in some embodiments. Also, the stage 604 of the image can be output of the scheme 507 in some embodiments.

FIG. 7 illustrates an example image 700 of crops in a field derived from image data. Image 700, which has been derived from image data that has been through many image processing stages (such as the stages shown in FIG. 6) shows multiple determined characteristics of the crop captured in the image. The image 700 is the result of step 404 in some embodiments, and the result of step 508 in some more specific embodiments. The characteristics determined include a crop height characteristic 702, a crop width characteristic 704, a crop spacing characteristic 706, and crop color characteristics 708A and 708B. From the crop color characteristics, a crop reflectiveness characteristic can be derived (such as at step 404). Also, from the crop width and spacing characteristics, a crop density characteristic can be derived (such as at step 404). Further, another characteristic determined that is presented in the image 700 is the field slope 720 of the field captured in the image. Also, included with the image 700 is geotag 712 as well as variety label 710. The geotag 712 provides the date and time that the image 700 was captured as well as the GPS coordinates of the harvester when the image was captured. In some embodiments, a geotag such as geotag 712 is the output of step 410 of method 400. The variety label 710 provides the variety of the crop determined from at least some of the determined characteristics. In some embodiments, a label such as label 710 is the output of step 408 of method 400. Also, in some embodiments, images, such as image 700, is used as input for the generating of a map of crop varieties (e.g., see step 412 as well as map 904).

FIG. 8 illustrates an example image 800 of corn kernels derived from image data. As shown in FIG. 8, image 800 was derived from a similar set of image data as image 700 except it was derived from a portion of the data used to derive image 800, which is related to crop image data after the crop was processed in a harvester; whereas, image 700 was derived from data in the set related to crop image data before the crop was harvested by the harvester. The set of images including images 700 and 800 is associated with a certain position of the harvester at a certain time (which makes it a set). Because the images 700 and 800 are from the same set, the image 800 includes geotag 712 and label 710, which is included in other images of the set. Because of this characteristic, in some embodiments, an image from a set can validate other images from the set in the crop classification processes described herein. In some embodiments, an analyzed image of the pre-harvested crop (e.g., image 700) is used as corroboration for the analysis of the image of the post-processed crop (e.g., image 800), or vice versa, in determining crop variety for the labeling of the images (such as the labeling at step 408).

Also, similar to image 700, image 800 has been derived from image data that has been through many image processing stages (such as the stages shown in FIG. 6), and shows multiple determined characteristics of the crop captured in the image. The image 800 is the result of step 404 in some embodiments, and the result of step 508 in some more specific embodiments. The characteristics determined include identification of a kernel (e.g., see kernel identifications 802, 802A, and 802B) within a certain space or component of the harvester, which can be used to derive different crop yield characteristics. The characteristics determined also include a kernel width characteristic (e.g., see kernel width characteristics 804 and 804B), a kernel root characteristic (e.g., see root characteristics 806, 806A, and 806B), and a kernel color characteristic (e.g., see seed color characteristics 808A and 808B). From different combinations of the aforementioned kernel characteristics, various crop characteristics can be derived (such as at step 404). And, the variety label 710 was determined from at least some of such determined characteristics shown in image 800 (e.g., see step 408).

FIG. 9 illustrates a display 902 of a user interface device 900 (e.g., see user interface 216 shown in FIG. 2) displaying a map 904 of the varieties of a crop in a field based on labeled and geotagged images. Specifically, crop varieties "1.1" and "1.2" of the crop are displayed in the map 904. The map 904 provides determined crop varieties associated with different locations of a field of crops. As shown in FIG. 9, each sector of the map 904 includes a respective variety number of the crop and the varieties (presented as variety numbers, e.g., "1.1" and "1.2") are displayed in the map per sector. Also, the map 904 provides confidence indicators that graphically represent when varieties determined are determined above a confidence threshold, meaning the variety determination is more likely to be valid. The confidence indicators in map 904 are shown by a dashed-line rectangle that contains the variety number for the sector. As shown, for example, sectors 906 and 916 include varieties that have been determined with a confidence level below the threshold. Whereas, sectors 908 and 918 include varieties that have been determined with a confidence level above the threshold.

As shown in FIG. 9, a crop variety map (e.g., see map 904) can show the determined crop varieties for each respective location where the crop was harvested. Each respective location can be associated with a corresponding sector of a field including the crop (e.g., see sectors 906 and 908). This can be important because being able to trace crop varieties within a crop field provides a significant agronomic value. The map allows the operator of a planter or a harvester to build a variety map independent of planting information (such as original or previous planting information), which is a great convenience to the operator. This is especially important when the operator does not have the planting information in the first place. Also, in some embodiments, the systems can pull satellite imagery and identify the different varieties from different color spectrums in the satellite imagery which can provide greater confidence in the disbursement of crop varieties within a field when such information is used with the generated map.

Also, in some embodiments, a crop variety map (e.g., see map 904) can be combined with a yield map. The advantage of the crop variety map or the crop variety map combined with the yield map over the yield map alone is that the crop variety map provides additional information on the factors for the yields represented in a yield map. The crop variety map, with or without being combined with the yield map, can also be combined with different types of agriculture informational maps such as a soil quality map, a soil moisture map, a soil pH-level map, and/or a crop or carbon density map. Such combined maps can then be used to analyze a crop and its field and possibly improve farming practices or some other variance that may affect quality of a crop for different crop varieties in different situations.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. The present disclosure can refer to the action and processes of a computing system, or similar electronic computing device, which manipulates and transforms data represented as physical (electronic) quantities within the computing system's registers and memories into other data similarly represented as physical quantities within the computing system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. Such a computer program can be stored in a computer readable storage medium, such as any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computing system bus.

The algorithms and displays presented herein are not inherently related to any particular computer or other apparatus. Various general-purpose systems can be used with programs in accordance with the teachings herein, or it can prove convenient to construct a more specialized apparatus to perform the methods. The structure for a variety of these systems will appear as set forth in the description herein. In addition, the present disclosure is not described with reference to any particular programming language. It will be appreciated that a variety of programming languages can be used to implement the teachings of the disclosure as described herein.

The present disclosure can be provided as a computer program product, or software, which can include a machine-readable medium having stored thereon instructions, which can be used to program a computing system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

While the invention has been described in conjunction with the specific embodiments described herein, it is evident that many alternatives, combinations, modifications and variations are apparent to those skilled in the art. Accordingly, the example embodiments of the invention, as set forth herein are intended to be illustrative only, and not in a limiting sense. Various changes can be made without departing from the spirit and scope of the invention.

## Claims

1. A method, comprising:
capturing, by a camera (302 or 304) mounted to a harvester (300), images of a crop (600, 700, 800) while the harvester (300) is moving through a crop field, to track varieties of the crop in the field (step 402);
determining, by a computing system (200) communicatively coupled to the camera (302 or 304), characteristics of the crop (702, 704, 706, 708A, 804, 806, 808A) in the images (600, 700, 800) (step 404);
determining, by the computing system (200), whether the determined characteristics (702, 704, 706, 708A, 804, 806, 808A) deviate from known characteristics of a first variety of the crop (step 406);
when the determined characteristics deviate from the known characteristics beyond a threshold, labeling (710), by the computing system (200), a portion of the images (600, 700, 800) containing the deviating characteristics as including a second variety of the crop instead of including the first variety of the crop (step 408); and
geotagging, by the computing system (200), the images (600, 700, 800) of the crop according to corresponding locations of the harvester (300) as the images (600, 700, 800) are capture by the camera (302 or 304) (step 410).

2. The method of claim 1, further comprising actively and continually monitoring, by the computing system (200), a standard deviation of the characteristics of the crop in the images (600, 700, 800) while the harvester (300) is moving through the field (step 405), and wherein the threshold changes according to changes in monitored standard deviation.

3. The method of either claim 1, wherein the determination of whether the determined characteristics deviate from the known characteristics of the first variety are based on a comparison of characteristics of the crop (702, 704, 706, 708A, 804, 806, 808A) in a predetermined sampling of the images (600, 700, 800) and the known characteristics of the first variety.

4. The method of claim 1 or claim 3, further comprising actively and continually monitoring, by the computing system (200), a standard deviation of the characteristics of the crop (702, 704, 706, 708A, 804, 806, 808A) in the images (600, 700, 800) while the harvester (300) is moving through the field (step 405), and wherein the threshold changes according to changes in monitored standard deviation.

5. The method of claim 4, further comprising summing or averaging, by the computing system (200), of the determined standard deviations (step 4052) and recording, by the computing system (200), the summation or the averaging as a single datapoint for a run of the field (step 4054).

6. The method of claim 5, further comprising, per run, summing or averaging, by the computing system (200), the single datapoints for multiple runs of the field (step 4056) and determining, by the computing system (200), whether a new variety exists in the field according to sums or averages the single datapoints for multiple runs of the field (step 4058).

7. The method of any of claims 1 through 6, further comprising providing, by the computing system (200), a user interface (216) to allow a user to either confirm or reject the determination of the new variety existing in the field (step 4080).

8. The method of any of claims 1 through 7, wherein when the computing system (200) determines whether a new variety exists in the field, the computing system (200) considers crop height (702), crop color (708A, 708B), crop density (704, 706), or any combination thereof as characteristics of the crop.

9. The method of claim 8, wherein when the computing system (200) determines whether a new variety exists in the field, the computing system (200) further considers one or more secondary factors of the crop, which include yield of the crop, elevation of field, slope of field (720), measured mass of the crop, seed size of the crop (804, 804B), and seed color (808A, 808B) of the crop.

10. The method of any of claims 1 through 9, wherein the determination of characteristics of the crop in the images (600, 700, 800) is based at least on a computer vision analysis (steps 504, 506 and 508).

11. The method of claim 10, wherein the determination of characteristics of the crop in the images (600, 700, 800) is further based on digital signal processing (step 502).

12. The method of claim 11, wherein the digital signal processing (step 502) occurs prior to the computer vision analysis (steps 504, 506 and 508) as a pre-processing step to generate enhanced input for the computer vision analysis.

13. The method of claim 12, wherein the computer vision analysis comprises inputting the enhanced input into an artificial neural network (ANN) (step 504), and wherein the determination of characteristics of the crop in the images is based at least on output of the ANN (step 508).

14. The method of claim 13, wherein the computer vision analysis comprises using aspects of the images (600, 700, 800) or derivatives of aspects of the images into an artificial neural network (ANN) (step 506), and wherein the determination of characteristics of the crop in the images is based at least on output of the ANN (step 508).

15. A system for tracking varieties of a crop in a field while a harvester (300) is moving through the field, comprising:
a camera (302 or 304) mounted to the harvester (300) and configured to capture images of the crop (600, 700, 800); and
a computing system (200) communicatively coupled to the camera (302 or 304), comprising:
instructions executable to detect a first variety of the crop within the images of the crop (600, 700, 800) by identifying a physical characteristic of the crop being within a first range of values of the physical characteristic (instructions 222);
instructions executable to record first locations of the harvester (300) as the first variety is being detected in the images (600, 700, 800) (instructions 224);
instructions executable to associate the first recorded locations with the first variety (instructions 224);
instructions executable to detect a second variety of the crop within the images of the crop (600, 700, 800) by identifying the physical characteristic of the crop being within a second range of values of the physical characteristic (instructions 222);
instructions executable to record second locations of the harvester (300) as the second variety is being detected in the images (600, 700, 800) (instructions 224); and
instructions executable to associate the second recorded locations with the second variety (instructions 224).
